# EUROPEAN PATENT SPECIFICATION

(11) **EP 3 856 496 B1**
(45) Date of publication and mention of the grant of the patent: **28.10.2026**
(21) Application number: 19794706.2
(22) Date of filing: 25.09.2019
(51) Int. Cl.: B29C 64/40, B29C 64/35, B29C 64/386, B33Y 10/00, B33Y 30/00, B33Y 40/00, B33Y 50/00, B29C 64/106, B29C 33/44, B29C 33/76

(54) **AUTOMATED 3D-PRINTING OF HOLLOW OBJECTS**
AUTOMATISIERTES 3D-DRUCKEN VON HOHLKÖRPERN
IMPRESSION 3D AUTOMATISÉE D'OBJETS CREUX

(30) Priority: 26.09.2018 US 201862736473 P
(43) Date of publication of application: 04.08.2021
(73) Proprietor: Stratasys Ltd., 7670402 Rehovot (IL)
(72) Inventor: BRESSLER, Yoav, 6998243 Tel Aviv (IL); SHITRIT, Yaniv, 7874156 Ashkelon (IL); EDER, Naftali Emanuel, Kiryat Gat (IL)
(74) Representative: Pearl Cohen UK
(86) International application number: PCT/IL2019/051061
(87) International publication number: WO 2020/065650

(56) References cited:
- EP-A1- 2 384 882
- EP-A1- 3 219 418
- EP-A2- 3 069 805
- GB-A- 2 517 490

## Description

### BACKGROUND OF THE INVENTION

### 1. TECHNICAL FIELD

The present invention relates to the field of 3D (three dimensional) printing, and more particularly, to 3D-printing of hollow objects.

### 2. DISCUSSION OF RELATED ART

U.S. Patent No. 8,865,047 teaches a support construction and a method of creating a support construction in a volume generated by solid freeform fabrication, where the support construction includes layers of supporting materials, such layers comprising a continuous strip of material within such volume such that when the strip is lifted or pulled, the layers of supporting materials including the strip are removed together from the volume.
EP2384882A1 discloses a method for creating an internal support construction in a hollow 3D object.

### SUMMARY OF THE INVENTION

The following is a simplified summary providing an initial understanding of the invention. The summary does not necessarily identify key elements nor limits the scope of the invention, but merely serves as an introduction to the following description.

The invention is defined by claim 1.
One aspect of the present invention may provide a method comprising: deriving a central line of a hollow 3D (three dimensional) object model, calculating at least one reference point on an inner surface of the hollow 3D object model, and filling the hollow 3D object model with support material that comprises a thread defined with respect to the central line and to the at least one reference point, and with filling material, wherein at least one of: the deriving, the calculating and the filling is carried out by at least one computer processor.

In some embodiments, the method further comprises calculating a reference line along the inner surface of the hollow 3D object model and defining the thread with further respect to the reference line.

In some embodiments, the method further comprises defining the thread as a curve that winds back and forth between the central line and the reference line.

In some embodiments, the method further comprises defining the thread as a spiral extending along the central line at distances defined by the reference line.

In some embodiments, the method further comprises defining the thread as a Lissajous curve extending along the central line at distances defined by the reference line.

In some embodiments, the method further comprises defining the thread to extend a skeleton of the hollow 3D object model, wherein the at least one reference point is used to define at least one direction of the skeleton extension.

In some embodiments, the method further comprises comprising defining a thickness of the thread with respect to distances between adjacent thread windings.

In some embodiments, the method further comprises defining a thickness of the thread with respect to a specified curvature radius defined according to a tensile strength of specified thread material, wherein the thickness is defined to exceed the specified curvature radius along the thread.

In some embodiments, the thickness is defined with respect to at least one parameter relating to a whole of the thread.

In some embodiments, the method further comprises filling gaps between the hollow 3D object model and the thread with a filling material, wherein the filling material has a tensile strength which is lower than that of the thread.

In some embodiments, the thread has a chain structure.

In some embodiments, the chain structure is made of a non-elastomeric material.

Another aspect of the present invention may provide a computer program product comprising a non-transitory computer readable storage medium having computer readable program embodied therewith, the computer readable program configured to carry out the method.

Another aspect of the present invention may provide a 3D modelling system comprising the computer program product.

Another aspect of the present invention may provide a composite 3D-printed object, comprising: a hollow 3D-printed object which corresponds to a given hollow 3D object model, and 3D-printed support material filling the hollow 3D printed object, the support material comprising (i) a thread made of a material having a tensile strength that enables pulling the thread out of the hollow 3D-printed object without tearing the thread or (ii) a thread having a non-elastomeric chain structure, and filling material having a tensile strength lower than the material of the thread.

In some embodiments, the thread is defined with respect to a central line of the hollow 3D object model and at least one reference point on an inner surface of the hollow 3D object model.

In some embodiments, the thread is defined with respect to a central line of the hollow 3D object model and a reference line along an inner surface of the hollow 3D object model.

In some embodiments, the thread follows a curve, which is a spiral, or a Lissajous curve or a combination thereof, that winds back and forth between the central line and the reference line.

In some embodiments, the thread has a thickness selected to fill at least 50% of the hollow 3D-printed object by the thread, and to maintain a curvature radius of the thread below a specified curvature radius that relates to a tearing risk of the thread.

In some embodiments, the thread is defined to extend a skeleton of the hollow 3D object model along at least one direction defined using the at least one reference point.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
**Figures 1-4** are high-level schematic illustrations of the derivation of an extractable support material thread to fill a hollow 3D object model, according to some embodiments of the invention;
**Figure 5A** is a high-level schematic block diagram illustrating the design of support for hollow object models and the production of hollow objects therefrom, according to some embodiments of the invention;
**Figure 5B** is a high-level schematic illustration of the definition of spatial compartments with relation to the object model, according to some embodiments of the invention;
**Figure 5C** is a high-level schematic illustration of an alternative method of deriving the thread, according to some embodiments of the invention;
**Figure 6** is a high-level flowchart illustrating a method, according to some embodiments of the invention;
**Figures 7A-7B** are three-dimensional representations of a hollow object comprising a solid chain support construction according to an embodiment of the invention; and
**Figures 8A-8B** are three-dimensional representations of a hollow object comprising a solid chain support construction according to another embodiment of the invention.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention may be practiced without the specific details presented herein. Furthermore, well known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein are for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing", "deriving" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. In certain embodiments, illumination technology may comprise, electromagnetic radiation in the visual range, ultraviolet or even shorter wave radiation such as x rays, and possibly even particle beams.

Embodiments of the present invention provide efficient and economical methods and mechanisms for 3D-printing hollow objects and thereby provide improvements to the technological field of 3D printing. Additive manufacturing of intricate and complicated shaped objects, e.g., objects with hollows (e.g., a cavity within an object having one or more openings), especially convoluted objects, branched objects and objects with narrow opening(s), is hindered, in the prior art, by the problem of support removal. For example, when manufacturing hollow objects using inkjet technology, support structure(s) are required to fill the cavity, and subsequently to be cleaned (removed) from the cavity. When the geometry of the cavity is complex (e.g., long, convoluted), cleaning is difficult using traditional methods such as water jet, immersion in corrosive liquid, etc. Disclosed embodiments provide automated methods for constructing internal supports (e.g., in the form of threads, or possibly laces, chains etc.) that can be pulled out of the cavity to simplify cleaning the 3D-printed hollow objects. Disclosed algorithms may create a 3D structure of a prescribed shape to be additively manufactured within a 3D object model, to facilitate removal of the internal support from the object, upon completion of its 3D-printing.

Methods, particularly automated methods, are provided, as well as 3D-printed composite and hollow objects and 3D-printing systems for printing them. Methods comprise deriving a central line of a hollow 3D object model, calculating reference point(s) and/or line(s) along an inner surface of the hollow 3D object model, and filling the hollow 3D object model with material (e.g., supporting materials) that comprises a thread defined with respect to the central line and the reference point(s) and/or line(s) and with filling material surrounding the thread. The support construction thus formed may be removed from the 3D object by pulling on the thread, extracting it and the surrounding support filling from the hollow object, thus enabling 3D-printing of convoluted objects, objects with narrow openings, elongated tube-like objects made of hard or soft material etc. The parameters of the thread, such as type of curve and thickness, may be selected to ensure thread extraction without risk of tearing or knotting the thread. Disclosed methods may be implemented automatically, or some manual adjustments such as parameter selection may be applied to fine tune the methods.

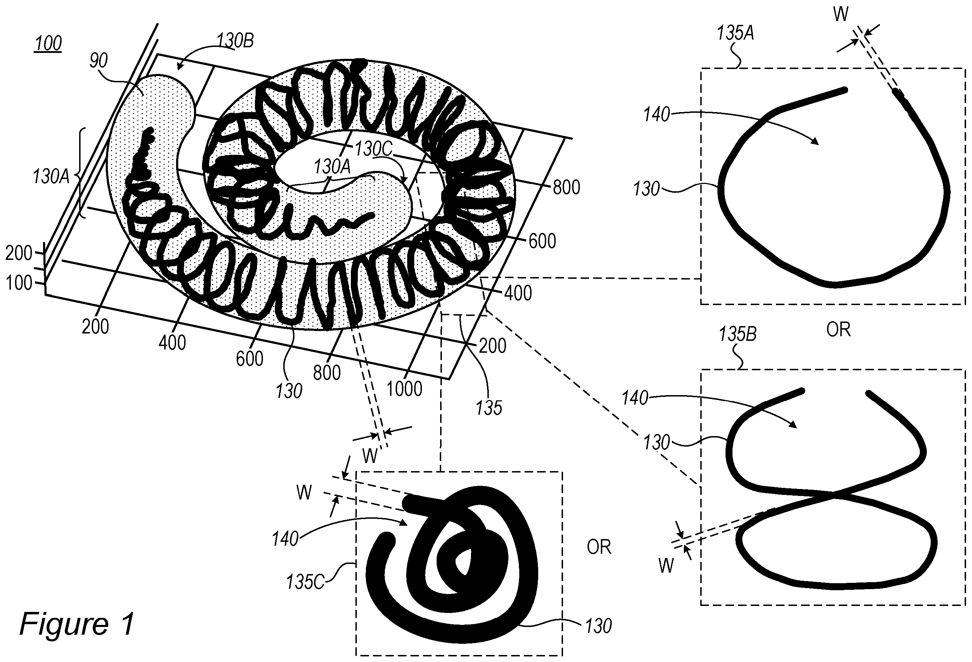

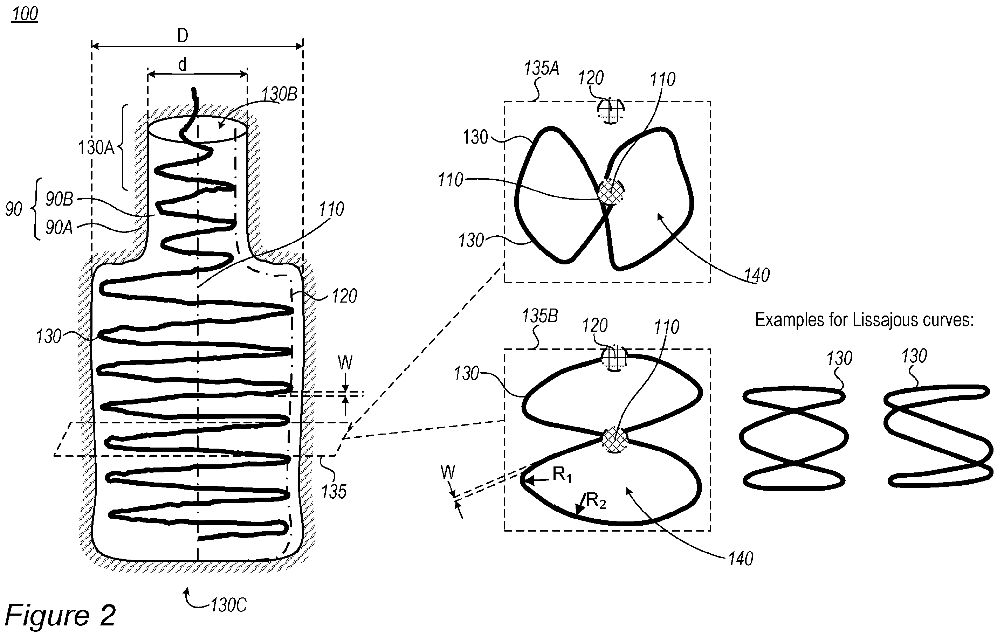

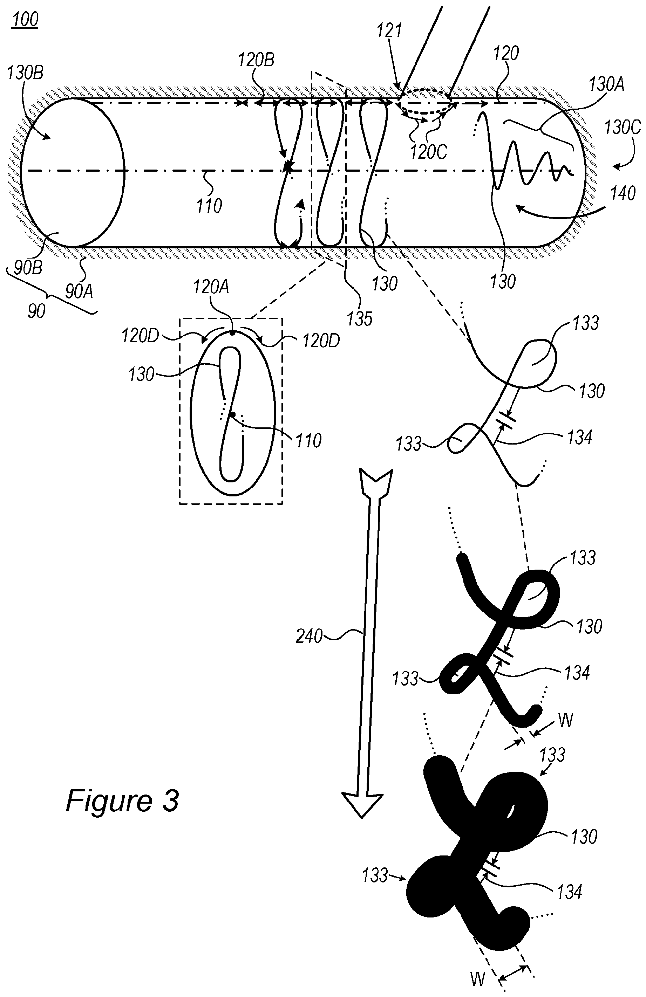

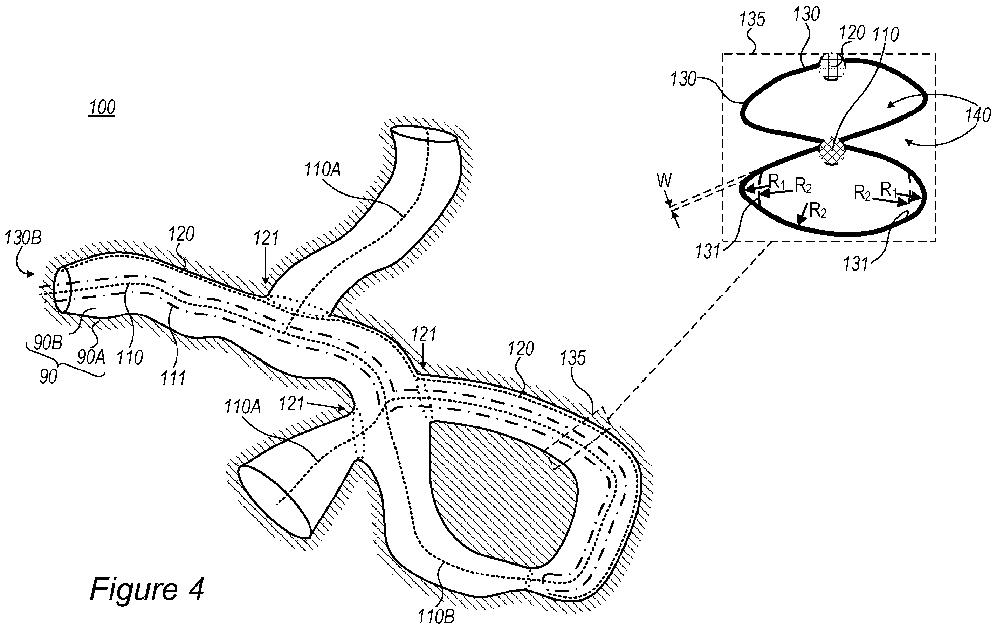

**Figures 1-4** are high-level schematic illustrations of the derivation of an extractable support material thread **130** printed within a hollow 3D object model **90,** according to some embodiments of the invention. **Figures 1-4** illustrate schematically the derivation of threads **130** within various 3D object models **90,** such as spiral object **90** illustrated in **Figure 1****,** bottle-like object **90** illustrated in **Figure 2****,** and bifurcated object **90** illustrated schematically in **Figure 4****.** Derived 3D models **100** comprise 3D objects **90,** thread **130** and possibly additional filling material **140.** **Figure 1** illustrates schematically spiral thread **130** designed in elongated tube model **90,** **Figure 2** illustrates schematically thread **130** designed in bottle model **90,** **Figure 3** illustrates schematically the derivation of thread **130** and **Figure 4** illustrates schematically the derivation of thread **130** in branched model **90.** Cross sections **135** are illustrated in an approximate manner, in the sense that threads **130** are continuous throughout the object model, while in some of the cross sections they are illustrated as closed shapes, e.g., as closed Lissajous curves. It is understood that curves in consecutive cross sections are interconnected to form continuous thread **130** throughout the object. Elements from **Figures 1-4** may be combined in any operable combination, and the illustration of certain elements in certain figures and not in others merely serves an explanatory purpose and is non-limiting. It is noted that, in the following, numeral **90** designates a hollow object **90,** which is usually modeled by a mesh, and often in the form of an STL file (but not limited thereto). In certain embodiments, numeral **90A** is used to denote the body of the model, while numeral **90B** is used to denote the cavity inside the hollow model, as indicated e.g., in **Figures 2****,** **3** and **4****.**

For example, **Figure 1** illustrates schematically a spiral thread **130** designed within an elongated tube model **90** along a central line thereof, either peripherally as indicated schematically in cross section **135A** and/or peripherally and crossing into the center, roughly "8"-like shaped, as indicated schematically in cross section **135B.** Thread **130** may have an optimized thickness (denoted by "W") which may be calculated to optimize the ability to remove thread **130** from within elongated tube model **90** after 3D printing it, reducing the risk of tearing or knotting and maximizing the removal of material from within model **90.** Cross section **135C** illustrates schematically a more curled and thicker thread **130** which fills in hollow object model **90** more completely. Any of the examples in cross sections **135A-C** may be combined, either within cross section **135** and/or along central line **110,** respectively to object characteristics and requirements concerning the thread material (central line **110** is shown in **Figures 2****,** **3** and **4** but omitted from **Figure 1** for clarity, in a non-limiting manner). The intermediate space surrounding thread **130** within object cavity **90B** may be filled with filling material **140** (e.g., supporting materials), which may be weaker than the thread material (the filling material may e.g., be gel-like) and may be removed together with the thread upon pulling thread **130.** One or both ends **130A** of thread **130,** e.g., at one or more openings **130B** of object **90** and/or at one or more dead ends **130C** of object **90** may be designed differently from thread **130,** e.g., be narrower to further reduce the tearing risk and/or as cleaning is simpler near the object's ends.

In another example, **Figure 2** illustrates schematically thread **130** designed within a bottle model **90** (with numeral **90A** denoting the bottle building material and numeral **90B** denoting the cavity within the bottle, which is filled by thread **130** and optionally filling material **140**) along a central line **110** thereof and with respect to a reference line **120** along the inner surface of the bottle (defined, e.g., between the bottle building material **90A** and the bottle cavity **90B**). The challenge in a bottle-like object is the narrow opening (denoted schematically by "d") relative to the broader inner hollow of the object (denoted schematically by "D"). Cross-sections **135A, B** illustrate schematically two curvature types of threads **130** that may be designed within the hollow, and with respect to central line **110** and reference line **120,** as well as variations of curves **130,** e.g., Lissajous curves, as explained below. As in **Figure 1****,** the cross-section curves are shown schematically, and may be thicker and vary in shape. In the cross sections, a schematic representation of central line **110** and reference line **120** is provided to illustrate the construction of thread curves **130** around central line **110** and in an orientation determined with respect to reference line **120** which provides corresponding reference points for the curve orientation along the object. The curvature radii along thread **130** may be configured to be larger than a specified curvature radius that relates to a tearing risk of the thread. In **Figures 2** and **4****,** curvature radii R₁ and R₂ (R₁<R₂) are illustrated schematically and in a non-limiting manner, as the curvature radius changes continuously along the 3D curve of the thread, and also depends on the thread thickness along its length. Thickening the thread may reduce the curvature radius at certain points to reduce the risk of tearing, as illustrated schematically by the broken line **131** in **Figure 4****,** increasing the curvature radius at the specific point from R₁ to R₂.

In yet additional examples, **Figures 3** and **4** illustrate schematically the derivation of central line **110** and reference line **120** for generic hollow object model **90** in **Figure 3** and for branched hollow model in **Figure 4****.** It is noted that for both objects **90,** the object body (made of modelling material) is indicated schematically by numeral **90A,** while the cavity within the object (to be at least partly filled with thread 130) is indicated schematically by numeral **90B.**

Central line **110** of hollow 3D object model **90** may be determined, e.g., by deriving a skeleton of cavity **90B** inside 3D object **90A** and possibly simplifying the skeleton (indicated schematically by line **111** surrounding the selected portion) according to specified requirements such as curvature radius thresholds, twisting threshold or length threshold, which may be related to the tensile strength of the material(s) forming thread **130.** For example, as illustrated schematically in **Figure 4****,** skeleton sections marked **110A, 110B** may be removed from the skeleton when defining central line **110** due to various considerations, such as branching (**110A**), bending beyond specified thresholds (**110B**), or loops (demonstrated schematically in part by **110B**) that may cause thread **130** to tear upon extraction from the 3D-printed object. For example, central line **110** may be defined as the longest section of the skeleton, without branching or severe bending that exceeds a specified measure of bending. In certain embodiments, the skeleton may be derived by algorithms which represent 3D object **90** as being composed of approximately cylindrical sections, calculate the axis of each section, and connect the axes, e.g., with respect to angles between the sections, into the skeleton of 3D object **90.** In some embodiments, the skeleton may be simplified into the central line by removing bifurcations and/or loops, or by finding a longest part of the skeleton which does not bend beyond a specified threshold. Such simplifications may be related to the tensile strength of the material(s) forming thread **130** in order to avoid the risk of tearing the thread while removing it from the printed object.

In certain embodiments, numerical computation software may be used to calculate the skeleton, e.g., by first converting the shape of cavity **90B** into a raster representation, e.g., as voxels of a prespecified resolution, and then using morphological skeletonization or erosion functions such as bwskel and bwulterode in MatLab^{©} to reduce the volume of cavity **90B** to corresponding lines. Using related computational tools, the longest path in the skeleton may be calculated by first converting the skeleton to a graph representation, and then using graph object functions to find the most distant node of a graph from a given node at or near some entrance of opening(s) **130B** or object **90.**

Reference line **120** and/or reference point(s) **120** may be calculated in order to provide a consistent direction or orientation for curve **130,** as illustrated schematically in **Figure 3** by points **120A** and arrows **120B, 120C** and **120D** which denote possible orientations of curve **130** that would otherwise be unclear (e.g., if reference line **120** is not determined), derived as explained below. For example, reference line **120** may be calculated along an inner surface of hollow 3D object model **90A,** e.g., by maintaining the distance of reference line **120** from central line **110** within specified boundaries, to avoid bifurcations, e.g., bifurcation **121** - see e.g., **Figure 3****,** with reference line **120** denoted by multiple short arrow denoting the stepwise calculation of reference line **120.** Maintaining the distance between central line **110** and reference line **120** as not exceeding a specified distance may yield reference lines **120** that continue along the same object branch as central line **110,** rather than deviating into other branches of object **90,** e.g., by minimizing the maximal distance between the inner surface and the central line. Alternatively or complementarily, reference line or point(s) **120** may be defined as going along the skeleton sections which are parts of central line **110.**

In certain embodiments, the following stages may be implemented to derive reference line **120.** Starting with an arbitrary cross section **135** of shape **90,** an initial point **120A** may be selected in the inner surface of object **90B** and in cross section **135,** e.g., as one of the points on cross section **135** which has a minimal distance to central line **110.** Additional points **120A** may then be selected with respect to adjacent cross sections **135** in both directions with respect to central line **110** (indicated schematically by the double-headed arrows denoted **120B** in the schematic illustration of **Figure 3**), and the process may be repeated until an end of central line **110** (e.g., at opening **130B** of object **90**) is reached. In cases the inner cavity **90B** branches **121** (or in other cases such as diameter changes), reference line **120** may be determined as following, indicated schematically by the arrows denoted **120C** in the schematic illustration of **Figure 3****.** Small steps **120C** in the construction of reference line **120** may be determined with respect to alternatives (such as in case of branching **121**), e.g., by minimizing a function of at least the following factors: (i) the distance of alternative steps **120C** to central line **110,** (ii) the deviation of direction **120C** from the direction of the previous steps **120B** or from a weighted accumulation of some previous steps **120B,** and (iii) the deviation (denoted **120D**) of from the direction of line **110** in the plane of cross-section **135.** Reference line **120** may then be constructed from the piecewise linear collection of steps **120B, 120C,** optionally smoothed to remove noise by fitting smoother function(s) to it, while constricting reference line **120** to remain inside cavity **90B** and/or the surface between object body **90A** and cavity **90B.**

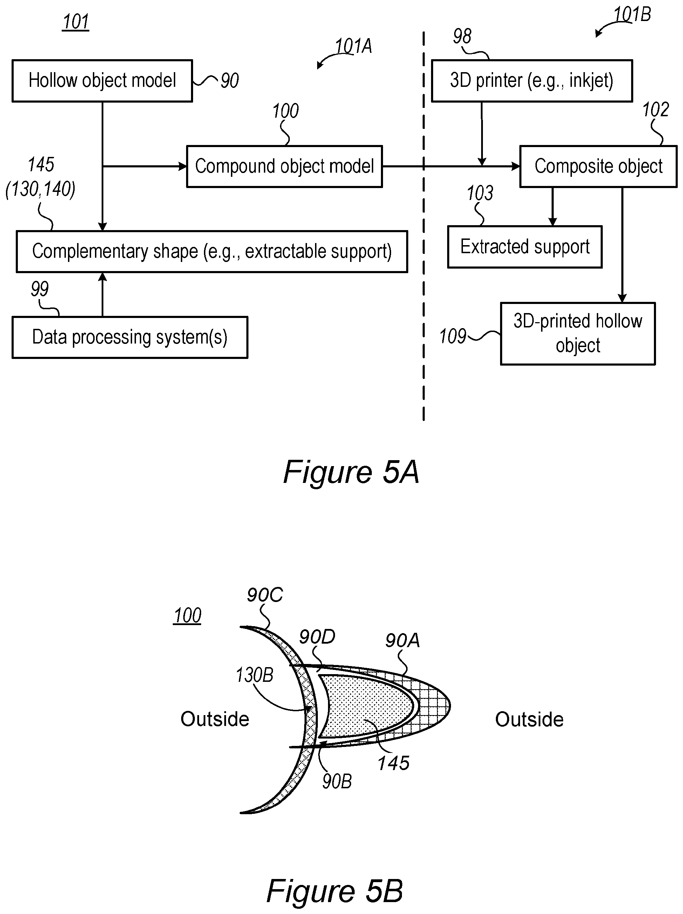

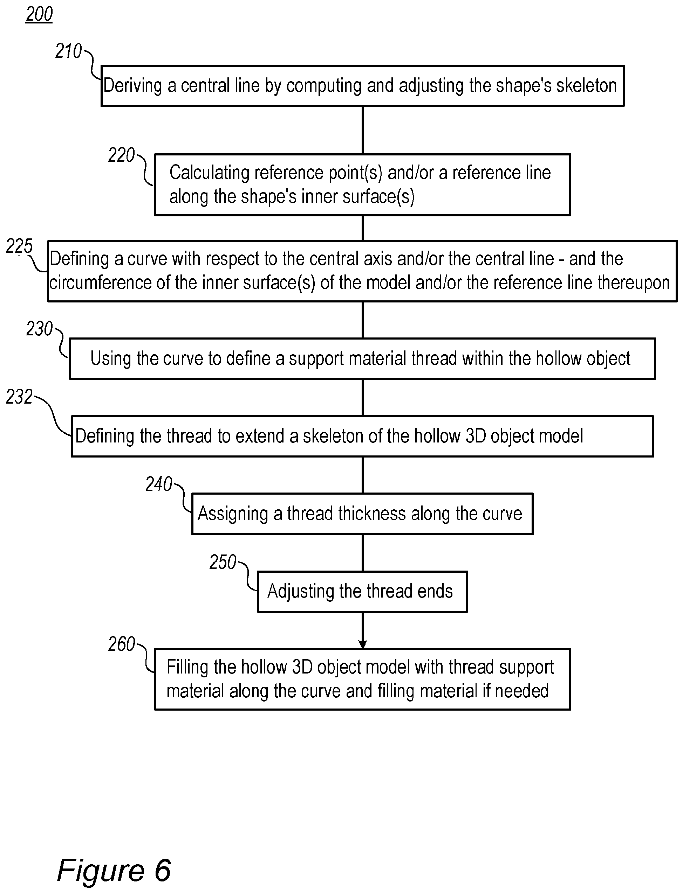

As further illustrated in **Figure 3****,** hollow 3D object model **90** may be filled with support material(s) that comprise thread **130** as defined with respect to central line **110** and reference line **120,** and possibly with additional filling material **140,** e.g., support material(s), to fill in gaps between thread **130** and the inner surface of object model **90** (see, e.g., **Figure 4**). Thread **130** may be defined as a curve passing back and forth between central line **110** and the circumference of the inner surface of object model **90,** oriented by reference line **120** as a guideline. For example, the curve may be a Lissajous curve, with parameters selected to yield proper filling of the inner cavity of object model **90.** The thickness of curve **130** may be determined to avoid contact between adjacent windings of thread **130,** e.g., maintaining a minimal distance **134** therebetween and/or maintaining loops **130** in thread **130** open. In the schematic illustration, the process of adjusting the thread thickness (denoted by "W") is indicated schematically in **Figure 3** by numeral **240** (corresponding to the step of assigning the curve thickness along the curve of method **200,** illustrated schematically below in **Figure 6**) and may proceed, e.g., stepwise or continuously until a corresponding stopping criterion is met. Examples for stopping criteria may comprise e.g., calculating and relating to distances **134,** to open windings **133** and/or possibly criteria relating to overall parameters of thread **130** such as total length, total volume, occupancy of the hollow parts of object model **90** (see the 'complementary shape' referred to in **Figures 5A** and **5B** below) and/or possibly a model-based estimation of thread parameters, such as derived from an electrical modelling of thread **130** with a resistance parameter used as indicator for expansion of and possibly short circuits in thread **130** that can be used as stopping criterion in determining thread thickness W.

In some embodiments, one or more curves may be defined between central line **110** and the inner circumference (e.g., the inner surface) of object model **90,** with respect to reference line **120,** e.g., as curve(s) that wind along the inner circumference and/or through central line **110.** The curve(s) may be used to define support material thread **130** by assigning a curve thickness along the curve, which converts the curve into material thread **130** that may be 3D-printed with the object. For example, the curve and thread may be defined as a spiral extending along central line **110** at distances defined by reference line **120,** as a Lissajous curve extending along central line **110** at distances defined by reference line **120,** or possibly as combinations thereof. The definition of the curves of the thread may be carried out automatically, e.g., by adjustment of curve parameters to specific object models **90.**

In certain embodiments, a plurality of reference points **120** may be used to derive thread **130,** in place or in addition to reference line **120** or parts thereof. In case several candidate reference points **120** match the specified derivation criteria, a subset of points **120** may be selected (e.g., randomly) and used for the thread derivation.

In some embodiments, curve (or thread) thickness may be assigned with respect to distances between adjacent thread windings, e.g., thread thickness may be defined as not exceeding half, or somewhat less than half of distance **134** between adjacent thread windings and/or as maintaining a specified extent of open windings **133.** In some embodiments, curve (or thread) thickness may be assigned with respect to a specified curvature radius defined according to a tensile strength of specified material forming the thread, wherein the thickness is defined to exceed the specified curvature radius along thread **130.** Thread thickness may be defined by a combination of the embodiments described above.

In some embodiments, filling the cavity in the 3D object beyond thread **130** may be carried out with filling material **140,** e.g., support material(s), that has a tensile strength which is lower than that of thread **130,** which may then be removed along with thread **130** and/or cleaned after extraction of thread **130.** In certain embodiments, ends **130A** of thread **130** may be further adjusted, with respect to their shape and/or thickness (e.g., have smaller radii or be thinner), to enable easier extraction of thread **130.** Alternatively or complementarily, more filling material **140** may be deposited at ends **130B** and/or **130C** of object **90** than in its more central parts, as it may be simpler to remove filling material **140** from object openings **130B** and/or object dead ends **130C** than from its internal regions. For example, referring to **Figures 1-4****,** object opening(s) **130B** may connect to cavity **90B,** and cleaning filling material **140** after performing the 3D printing process may be simple and not necessarily require thread **130** to fill a large portion of cavity **90B** in order to remove the support material(s) therefrom. At thread ends **130A,** thread **130** may be shaped in a simpler form than its shape within the rest of cavity **90B,** e.g., thread ends **130A** may comprise smoother lines leading to the interior of cavity **90B.** Alternatively or complementarily, thread ends **130A** at object dead ends **130C** may be deep inside object cavity **90B** and present a higher risk of tearing or be more difficult to remove if torn. Accordingly, thread ends **130A** at object dead ends **130C** may also be reduced in complexity. Either or both features may be implemented by controlling the extent and breadth of thread **130** in any cross section **135** along object **90** as a function of position of cross section **130** along central line **110.**

**Figure 5A** is a high-level schematic block diagram illustrating the design of support for hollow object models **90** and the production of hollow objects therefrom, according to some embodiments of the invention. The design scheme is indicated by numeral **101,** which may denote a 3D-printing system in general lines. The left-hand side of **Figure 5A** describes the realm of the intangible (denoted by **101A**). Using the input description of an object model **90** to be printed, usually as a mesh, and often as a STL file, a data processing unit **99** may be configured to process input **90** according to some parameters described herein to produce descriptions of thread **130** and other support elements **140,** jointly denoted by numeral **145** - which are to be printed as inner support of object **90** to yield compound object model **100** to be printed. The right-hand side of **Figure 5A** describes the realm of the tangible (denoted by **101B**). 3D printer **98** prints a composite tangible object **102** from its description as compound object model **100.** Then the extractable materials **103,** printed according to the description of complementary shape **145,** are extracted from composite object **102,** leaving a hollow physical object **109** that is described by hollow object **90.**

**Figure 5B** is a high-level schematic illustration of the definition of spatial compartments with relation to object model **90,** according to some embodiments of the invention. **Figure 5B** provides a schematic two-dimensional cross section of model **90** and its spatial surroundings. In some embodiments, given the geometry or shape of hollow object **90** to be printed, complementary shape **145** may be created in the shape of hollow cavity **90B,** e.g., as a support for 3D printing hollow object model **90.**

Complementary shape **145** may be derived by the following steps: (i) The obtained description of model **90,** usually in the form of a mesh, and often by means of an STL file, provides a distinction between an outside spatial region (including the outside of model 90 and its internal cavity **90B**) and an inside spatial region of object model **90** (including the object body **90A**). (ii) one or more lids **90C,** e.g., expressed as additional mesh(es) may be applied to close corresponding opening(s) **130B** of the shape in model **90** - providing a clear distinction between an "outside" (indicated schematically in **Figure 5B**) and the spatial region taken by object **90,** including cavity **90B** and lid(s) **90C.** Specifically, the cavity region **90B** may be defined by being delimited by the original mesh (of object model **90**) and lid(s) **90C.**

In certain embodiments, the inner surface of object model **90** may be eroded, or taken back by a few millimeters, to form some space **90D** between object model **90** and cavity **90B** in which the support is designed, to form a safeguard to prevent thread **130** from touching the internal surface of printed object **109** by some error or inaccuracy of calculation (spatial region **90D** may be filled e.g., with filling material **140,** or a check may be run to verify thread **130** does not enter spatial region **90D,** the latter may be then constructed from building material).

The user or data processing system(s) **99** may select parameters for complementary shape **145,** e.g., one comprising thread **130** and possibly filling material **140,** such as shape parameters (e.g., resembling a thread, a lace, a chain, a spring or a cork screw), parameters of the selected shape (e.g., the number of turns per unit length for a spiral, spring or cork screw, Lissajous parameters, thickness of thread or lace, etc.), fill factors of different materials (e.g., a percentage of thread material to be pulled and a percentage of filling material **140,** e.g. surrounding the thread), the volume of complementary shape **145** within object cavity **90B,** as controlled for example by the optional erosion of object model **90A** and ensuing extension of cavity **90B** as described above, a required degree of extraction reliability, which may be determined empirically as a function of the other parameters, and so forth.

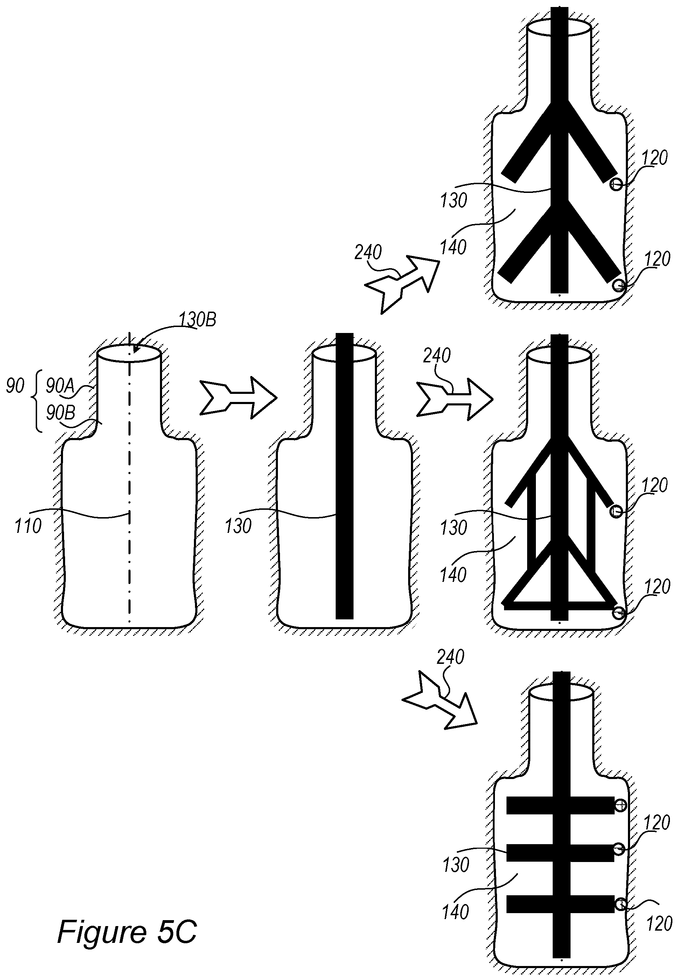

**Figure 5C** is a high-level schematic illustration of alternative methods of deriving thread **130,** according to some embodiments of the invention. Alternatively or complementarily, thread **130** may be derived, at least partly, according to the following steps, using one or more reference points **120** rather than continuous reference line **120.** In certain embodiments, thread **130** may be formed using a combination of stages disclosed herein (e.g., reference line **120** may be used only in part of object, or as providing initial or final stages of deriving thread **130**). For example, following a determination of the entry point of complementary shape **145** into cavity **90B** of hollow object model **90,** a skeleton **110** of the complement shape **145** (represented in the illustration in **Figure 5C****,** in a non-limiting manner, as a central line) may be calculated automatically, e.g., with the first point of the skeleton being assigned to the entry point to the hollow cavity, e.g., at opening **130B,** and other points calculated as described above for example through a raster representation of the shape defined by object model **90** - to yield initial thread **130.** Initial thread **130,** or selected parts thereof, may then be expanded in various ways (illustrated in three non-limiting examples, denoted by stage **240**), e.g., using either mesh-based or raster-based methods. In certain embodiments, initial thread **130** may be expanded by adding branches to it, with reference to calculated reference point(s) **120,** which may be used to determine the ends of the branches, and possibly additional parameters such as divergence angles from initial thread **130,** density of occupation of the inner hollow by thread **130** with branches, etc. In certain embodiments, initial thread **130** may be further expanded by interconnecting branches with one or more connections, illustrated schematically in the middle embodiment on **Figure 5C****.** Locations, density and other parameters of the connections may be determined according to reference point(s) **120** and/or additional parameters. In certain embodiments, branches of thread **130** may be designed to have different angles, depending e.g., on the form of object **130,** the strength of thread material, estimated forces that may act on thread **130** during its extraction from object **90,** etc. In an example, in raster form, the skeleton (initial thread and added branches **130**) may be thickened by dilation to a desired thickness, for example using morphological operators of numerical computation software.

In certain embodiments, points of complementary shape **145** may be used to define the placement of the model of complementary shape **145** within object model **90.** Complementary shape **145** may be formed from a shape constructed with respect to the skeleton, which is then thickened by dilation to the desired thickness, optionally while avoiding cross links between its voxels - and consecutively formed as a mesh or as a raster or in any required format for the printing process. Object model **90** and complementary shape **145** may then be merged into printable object model **100,** and upon completion of its 3D printing as composite object **102,** the complementary shape may be pulled to remove the support, yielding extracted support **103,** from the printed object, yielding 3D-printed hollow object **109.**

In a non-limiting example, thread **130** may be formed from the skeleton, e.g., by advancing along the skeleton and defining thread points as filling complementary shape **145** (or a certain portion thereof e.g., 100%, 90%, 80%, 70% etc.), e.g., by branching, or with respect the defined curves - by forming a small angle of rotation between sequential points on complement shape **145** relative to the current direction of the skeleton as an axis (central line **110**), in order to reduce the risk of tearing or knotting complement shape **145** upon extraction from object **109 -** below a specified threshold relating to the tensile strength of the complement shape material(s).

In various embodiments, object **109** may be made of rigid modeling material and/or of soft, possibly flexible modeling material. In certain embodiments, object **109** may comprise flexible modeling material, and thread **130** of complementary shape **145** may be used to enable, or simplify the removal of internal support material/s from within the hollow object. The modeling material forming the object may be stronger, e.g., more rigid, tougher, etc. than one or more material/s used to form complementary shape **145** including thread **130,** to avoid damage to object **109** while extracting support **103** (designed according to complementary shape **145**), e.g., by pulling thread **130** out of object **109** after the 3D printing is complete.

In certain embodiments, the algorithm for designing thread **130** (and/or complementary shape **145**) may be configured to prevent knots from forming in the thread, to facilitate extraction without tearing the material being extracted. Thread **130** (and/or complementary shape **145**) may be designed as a folded shape along central line **110,** possibly covering more or less parallel distances from central line **110** and guided by reference line **120,** following the inner side (i.e. inner surface) of the external object walls.

Certain embodiments may comprise composite (compound) 3D-printed object **102** comprising hollow 3D-printed object **109** which corresponds to given hollow 3D object model **90,** and 3D-printed support material **103** (such as complementary shape **145**) filling hollow 3D printed object **109.** Support material **103** comprises thread **130** made of a support material having a tensile strength that enables pulling thread **130** out of hollow 3D-printed composite object **102** without tearing thread **130,** as well as optionally filling material **140** having a tensile strength lower than the material(s) forming the thread. In various embodiments, thread **130** may be defined with respect to central line **110** of hollow 3D object model **90** and reference line **120** along the inner surface of hollow 3D object model **90.** Thread **130** may follow a curve, which may be a spiral, or a Lissajous curve or a combination thereof, and wind back and forth between central line **110** and reference line **120.** Thread may have a thickness selected to fill at least 50% (or possibly 70%, 80% or 90%) of hollow 3D-printed object **109** by thread **130,** and to maintain a curvature radius of thread **130** below a specified curvature radius that relates to a tearing risk of thread **130.**

It is noted that elements from **Figures 1****,** **2****,** **3****,** **4** and **5A****-5C** and the related disclosure may be combined in any operable combination, with the illustration of certain elements in certain figures and not in others merely serving an explanatory purpose and is non-limiting.

**Figure 6** is a high-level flowchart illustrating a method **200,** according to some embodiments of the invention. The method stages may be carried out with respect to a 3D modelling system and 3D object models described above, which may optionally be configured to implement method **200.** Method **200** may be at least partially implemented by at least one computer processor, e.g., in a 3D-printing module. Certain embodiments comprise computer program products comprising a computer readable storage medium having computer readable program embodied therewith and configured to carry out the relevant stages of method **200.** Method **200** may comprise the following stages, irrespective of their order.

Method **200** comprises deriving a central line of a hollow 3D (three dimensional) object model (stage **210**), e.g., by deriving a skeleton of the 3D object and simplifying the skeleton according to specified requirements such as curvature radius thresholds, twisting threshold or length threshold, which may be related to the tensile strength of the material forming the thread; calculating one or more reference point(s) and/or a reference line along an inner surface (or inner surfaces) of the hollow 3D object model (stage **220**), e.g., by maintaining the distance of the reference line from the central line within specified boundaries, to avoid bifurcations, or by selecting reference points according to specified criteria such density, relation to the object mesh or other; and filling the hollow 3D object model with support material that comprises a thread defined with respect to the central line and the reference line, and filling material (stage **260**), wherein deriving **210,** calculating **220** and/or filling **260** may be carried out by at least one computer processor.

In some embodiments, the skeleton may be derived **210** by algorithms which represent the 3D object as composed of approximately cylindrical sections, calculating the axis of each section, and connect the axes, e.g., with respect to angles between the sections, into a skeleton of the 3D object. In some embodiments, the skeleton may be simplified into the central line by removing bifurcations and/or loops, or by finding a longest part of the skeleton which does not bend beyond a specified threshold. Such simplifications may be related to the tensile strength of the thread material in order to avoid the risk of tearing the thread while removing it from the printed object.

In certain embodiments, a plurality of reference points may be used to derive the thread. In the case that several candidate reference points match the specified criteria, a subset may be selected randomly and used for the thread derivation.

In some embodiments, the reference line may be calculated **220** by proceeding along the inner surface(s) of the object and keeping within a distance from the central line which avoids bifurcations, e.g., by minimizing the maximal distance between the inner surface and the central line.

In some embodiments, one or more curves may be defined between the central axis and/or line of the object and the circumference of the inner surface of the model, aligned according to the reference line (stage **225**), e.g., as curve(s) that wind back and forth between the central line and the reference line.

Certain embodiments comprise using the curve(s) to define a support material thread within the hollow object (stage **230**). Alternatively or complementarily, in some embodiments, the thread may be defined to extend a skeleton of the hollow 3D object model (stage **232**).

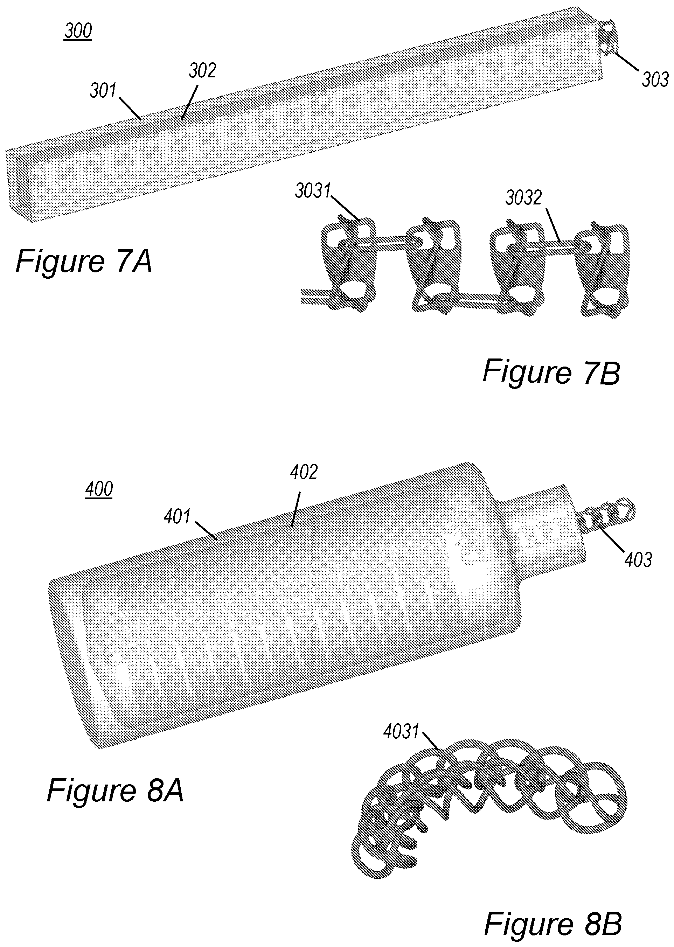

In some embodiments, the thread may be defined to have a chain structure (e.g., as described below with respect to Figures 7A, 7B and **Figures 8A, 8B**). In some embodiments, the chain structure may be made of a non-elastomeric material.

The curve(s) may be used to define the support material thread by assigning a curve thickness along the curve (stage **240**) which converts the curve into the material thread that may be 3D-printed with the object. For example, the curve and thread may be defined as a spiral extending along the central line at distances defined by the reference line, as a Lissajous curve extending along the central line at distances defined by the reference line, or possibly as combinations thereof. The definition of the curves may be carried out automatically, e.g., by adjustment of curve parameters to specific object models.

In some embodiments, curve (or thread) thickness may be assigned **240** with respect to distances between adjacent thread windings, e.g., thread thickness may be defined as not exceeding half, or somewhat less than half of the distance between adjacent thread windings. In some embodiments, curve (or thread) thickness may be assigned **240** with respect to a specified curvature radius defined according to a tensile strength of specified thread material, wherein the thickness is defined to exceed the specified curvature radius along the thread. Thread thickness may be defined by a combination of the embodiments described above.

In some embodiments, filling the 3D object model beyond the thread may be carried out with a filling support material that has a tensile strength which is lower than that of the thread, which may then be removed along with the thread and/or cleaned after extraction of the thread.

In certain embodiments, the ends of the thread may be further adjusted **250,** with respect to their shape and/or thickness, to enable easier extraction of the thread and/or to leave more filling material behind, to make it easier to clean the surfaces of the 3D object near the openings or in dead ends of the object.

**Figures 7A** and **7B** show an example of a waveguide **300** prepared according to an embodiment of the invention. Waveguide **300** comprises a body **301** and a hollow space filled with a filling material **302** (e.g. SUP706^{™}, Stratasys Ltd. Rehovot) enclosing a solid chain structure **303.** In the present embodiment, chain structure **303** comprises two types of links, support removal links **3031** with multiple crosslinks and a spade-like section, and force transfer links **3032** used to transfer the linear force from one link to the other. Upon pulling chain structure **303** out of waveguide **300,** the spade-like sections of removal links **3031** break up large volumes of filling material **302** into chunks, thereby facilitating fast removal of filling material from the hollow space of waveguide **300.** Subsequently, residues of filling material **302** can be easily and rapidly cleaned up from the hollow space of waveguide **300** via one or more additional mechanical and/or chemical processes.

**Figures 8A** and **8A** show an example of a bottle **400** prepared according to an embodiment of the invention. Bottle **400** comprises a body **401** and a hollow space filled with a filling material **402** (e.g. SUP706^{™}, Stratasys Ltd. Rehovot) enclosing a solid chain structure **403.** In the present embodiment, chain structure **403** comprises links **4031** having multiple crosslinks and a cage design to improve breaking up of filling material **402.** Upon pulling chain structure **403** out of bottle **400,** the cage sections of links **4031** break up large volumes of filling material **402** into chunks that are removed from the hollow space of bottle **400.** Subsequently, residues of filling material **402** can be easily and rapidly cleaned up from the hollow space of bottle **400** via one or more additional mechanical and/or chemical processes.

In some embodiments, the chain structure (e.g., such as chain structure **303** described above with respect to **Figures 7A** and **7B** and/or chain structure **403** described above with respect to **Figures 8A** and **8B**) may be made of a non-elastomeric material.

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram or portions thereof.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram or portions thereof.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram or portions thereof.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims.

## Claims

1. A method for creating an internal support construction in a hollow 3D object model (90), the method comprising:
computing a skeleton (111) of the hollow 3D object model by:
(i) representing the hollow 3D object model with approximated cylindrical sections;
(ii) calculating the axis of each of the approximated cylindrical sections; and
(iii) connecting the calculated axes;
deriving a central line (110) of the hollow 3D object model by simplifying the computed skeleton according to specified requirements including at least one of curvature radius thresholds, twisting threshold and length threshold,
calculating a reference line (120) along an inner surface of the hollow 3D object model by maintaining a distance of the reference line from the central line within specified boundaries; and
creating the internal support construction by filling the hollow 3D object model with support material that comprises a thread (130) defined with respect to the central line and to the reference line , and with filling material (140) surrounding the thread,
wherein said method is carried out by at least one computer processor.

2. The method of claim 1, further comprising defining the thread as a curve that winds back and forth between the central line and the reference line.

3. The method of claim 1, further comprising defining the thread as a spiral extending along the central line at distances defined by the reference line.

4. The method of claim 1, further comprising defining the thread as a Lissajous curve extending along the central line at distances defined by the reference line.

5. The method of claim 1, further comprising defining the thread to extend the skeleton of the hollow 3D object model, wherein the at least one reference line is used to define at least one direction of the skeleton extension.

6. The method of any one of claims 1-5, further comprising defining a thickness of the thread with respect to at least one of:
distances between adjacent thread windings; and
a specified curvature radius defined according to a tensile strength of specified thread material, wherein the thickness is defined to exceed the specified curvature radius along the thread.

7. The method of any one of claims 1-6, further comprising filling gaps between the hollow 3D object model and the thread with a filling material, wherein the filling material has a tensile strength which is lower than that of the thread.

8. The method of any one of claims 1-7, wherein the thread has a chain structure.

## Patentansprüche

1. Verfahren zum Erstellen einer internen Trägerkonstruktion in einem hohlen 3D-Objektmodell (90), wobei das Verfahren umfasst:
Berechnen eines Gerüsts (111) des hohlen 3D-Objektmodells durch:
(i) Darstellen des hohlen 3D-Objektmodells mit approximierten zylindrischen Abschnitten;
(ii) Berechnen der Achse jedes der approximierten zylindrischen Abschnitte; und
(iii) Verbinden der berechneten Achsen;
Ableiten einer Mittellinie (110) des hohlen 3D-Objektmodells durch Vereinfachen des berechneten Gerüsts gemäß vorgegebenen Anforderungen, die mindestens eine von einer Krümmungsradiusschwelle, einer Verdrehungsschwelle und einer Längenschwelle umfassen,
Berechnen einer Referenzlinie (120) entlang einer inneren Oberfläche des hohlen 3D-Objektmodells durch Einhalten eines Abstands der Referenzlinie gegenüber der Mittellinie innerhalb vorgegebene Grenzen; und
Erstellen der internen Trägerkonstruktion durch Ausfüllen des hohlen 3D-Objektmodells mit einem Trägermaterial, das einen Faden (130) umfasst, der im Verhältnis zur Mittelline und zur Referenzlinie definiert ist, und mit Füllmaterial (140), das den Faden umgibt,
wobei das Verfahren von mindestens einem Computerprozessor ausgeführt wird.

2. Verfahren nach Anspruch 1, ferner umfassend das Definieren des Fadens als eine Kurve, die sich zwischen der Mittellinie und der Referenzlinie hin und her windet.

3. Verfahren nach Anspruch 1, ferner umfassend das Definieren des Fadens als eine Spirale, die sich entlang der Mittellinie in Abständen erstreckt, die durch die Referenzlinie definiert sind.

4. Verfahren nach Anspruch 1, ferner umfassend das Definieren des Fadens als eine Lissajous-Figur, die sich entlang der Mittellinie in Abständen, die durch die Referenzlinie definiert sind, erstreckt.

5. Verfahren nach Anspruch 1, ferner umfassend das Definieren des Fadens, um das Gerüst des hohlen 3D-Objektmodells auszudehnen, wobei die mindestens eine Referenzlinie verwendet wird, um mindestens eine Richtung der Gerüstausdehnung zu definieren.

6. Verfahren nach einem der Ansprüche 1 bis 5, ferner umfassend das Definieren einer Dicke des Fadens im Verhältnis zu mindestens einem von:
den Abständen zwischen angrenzenden Fadenwicklungen; und
einem vorgegebenen Krümmungsradius, der gemäß einer Zugfestigkeit eines vorgegebenen Fadenmaterials definiert wird, wobei die Dicke dazu definiert wird, den vorgegebenen Krümmungsradius entlang des Fadens zu überschreiten.

7. Verfahren nach einem der Ansprüche 1 bis 6, ferner umfassend das Ausfüllen von Lücken zwischen dem hohlen 3D-Objektmodell und dem Faden mit einem Füllmaterial, wobei das Füllmaterial eine Zugfestigkeit aufweist, die kleiner als die des Fadens ist.

8. Verfahren nach einem der Ansprüche 1 bis 7, wobei der Faden eine Kettenstruktur aufweist.

## Revendications

1. Procédé pour créer une construction de support interne dans un modèle d'objet 3D creux (90), le procédé comprenant les étapes consistant à :
calculer une ossature (111) du modèle d'objet 3D creux en :
(i) représentant le modèle d'objet 3D creux avec des sections cylindriques approximatives ;
(ii) calculant l'axe de chacune des sections cylindriques approximatives ; et
(iii) connectant les axes calculés ;
dériver une ligne centrale (110) du modèle d'objet 3D creux en simplifiant l'ossature calculée selon des besoins spécifiés comprenant au moins l'un d'un seuil de rayon de courbure, d'un seuil de torsion et d'un seuil de longueur,
calculer une ligne de référence (120) le long d'une surface intérieure du modèle d'objet 3D creux en maintenant une distance de la ligne de référence par rapport à la ligne centrale dans des limites spécifiées ; et
créer la construction de support interne en remplissant le modèle d'objet 3D creux avec un matériau de support qui comprend un fil (130) défini par rapport à la ligne centrale et la ligne de référence, et avec du matériau de remplissage (140) entourant le fil,
dans lequel ledit procédé est effectué par au moins un processeur d'ordinateur.

2. Procédé selon la revendication 1, comprenant en outre la définition du fil comme une courbe qui serpente d'un côté à l'autre entre la ligne centrale et la ligne de référence.

3. Procédé selon la revendication 1, comprenant en outre la définition du fil comme une spirale s'étendant le long de la ligne centrale à des distances définies par la ligne de référence.

4. Procédé selon la revendication 1, comprenant en outre la définition du fil comme une courbe de Lissajous s'étendant le long de la ligne centrale à des distances définies par la ligne de référence.

5. Procédé selon la revendication 1, comprenant en outre la définition du fil pour étendre l'ossature du modèle d'objet 3D creux, dans lequel ladite au moins une ligne de référence est utilisée pour définir au moins une direction de l'extension d'ossature.

6. Procédé selon l'une quelconque des revendications 1 à 5, comprenant en outre la définition d'une épaisseur du fil par rapport à au moins un élément parmi :
des distances entre des enroulements de fil adjacents ; et
un rayon de courbure spécifié selon une résistance à la traction d'un matériau de fil spécifié, l'épaisseur étant définie pour dépasser le rayon de courbure spécifié le long du fil.

7. Procédé selon l'une quelconque des revendications 1 à 6, comprenant en outre le remplissage d'intervalles entre le modèle d'objet 3D creux et le fil avec un matériau de remplissage, le matériau de remplissage ayant une résistance à la traction qui est inférieure à celle du fil.

8. Procédé selon l'une quelconque des revendications 1 à 7, dans lequel le fil présente une structure de chaîne.
